Europäisches Patentamt

**European Patent Office**

**Office européen des brevets**

(11) Publication number: **0 044 897**
A1

# EUROPEAN PATENT APPLICATION

(21) Application number: **80401123.7**

(22) Date of filing: **30.07.80**

(51) Int. Cl.³: **B 67 C 3/20,** G 01 F **11/06**

(43) Date of publication of application: **03.02.82**
**Bulletin 82/5**

(84) Designated Contracting States: **CH FR GB IT LI**

(71) Applicant: **Ramoneda-Sibidi, Juan, Virgen de la Luz, 1, E Terrassa Barcelone (ES)**

(72) Inventor: **Ramoneda-Sibidi, Juan, Virgen de la Luz, 1, E Terrassa Barcelone (ES)**

(74) Representative: **Lepeudry-Gautherat, Thérèse et al, Cabinet Armengaud Jeune Casanova, Akerman, Lepeudry, 23 boulevard de Strasbourg F-75010 Paris (FR)**

(54) **Improvements in liquid proportioning devices.**

(57) The invention refers to improvements in liquid proportioning devices.

A tank (6) of filling fluid under pressure feeds a filling liquid collector (1). Fluid coming from said collector (1) shifts the sliding plunger (7) without shank of a dual action proportioning cylinder (2) provided at each of its ends with an inlet/outlet hole (8) for the liquid. A distributor valve (9), of the four-way L-type alternatively communicates in each cycle each the collector (1) and at least one bottle filling nozzle (12) with one of said holes (8) of the cylinder (2) through ducts (3, 4, 10, 11).

ACTORUM AG

Improvements in liquid proportioning devices.

- - - - -

The present invention refers to improvements in liquid proportioning devices, particularly applicable to bottle-filling machines of the type which include a filling liquid collector, a proportioning cylinder, a first duct, through which the liquid leaves the collector, and a second duct, through which the liquid reaches the bottle-filling nozzle.

Known proportioning devices of this type present the drawback that possible air inputs reduce the accuracy of the proportioned distribution of liquid into the bottle filling nozzle.

One aim of the invention is to propose improvements to known proportioning devices of this type, so that this drawback can be suppressed.

In essence, the improvements concerned are characterized in that a pressure higher than the atmosphere, is applied to the liquid contained in the collector, which brings about the shifting of a sliding plunger with no shank, which the cylinder is provided with, with dual effect ; at each end of the said cylinder there is an inlet/outlet hole for the liquid and a distributor valve is added to the assembly, preferably of the 4-way L-type, which is connected to the first and second ducts and to a third and fourth ducts, respectively connected to the input and/or output holes of the cylinder, all so that the valve alternatively communicates in each cycle each of the said first and second ducts with one of the said third and fourth ducts.

Other characteristics and advantages of the improvements object of the present invention will be gathered from the following description made in relation to the annexed drawings which illustrate a form of embodiment of same, by way of unlimiting example.

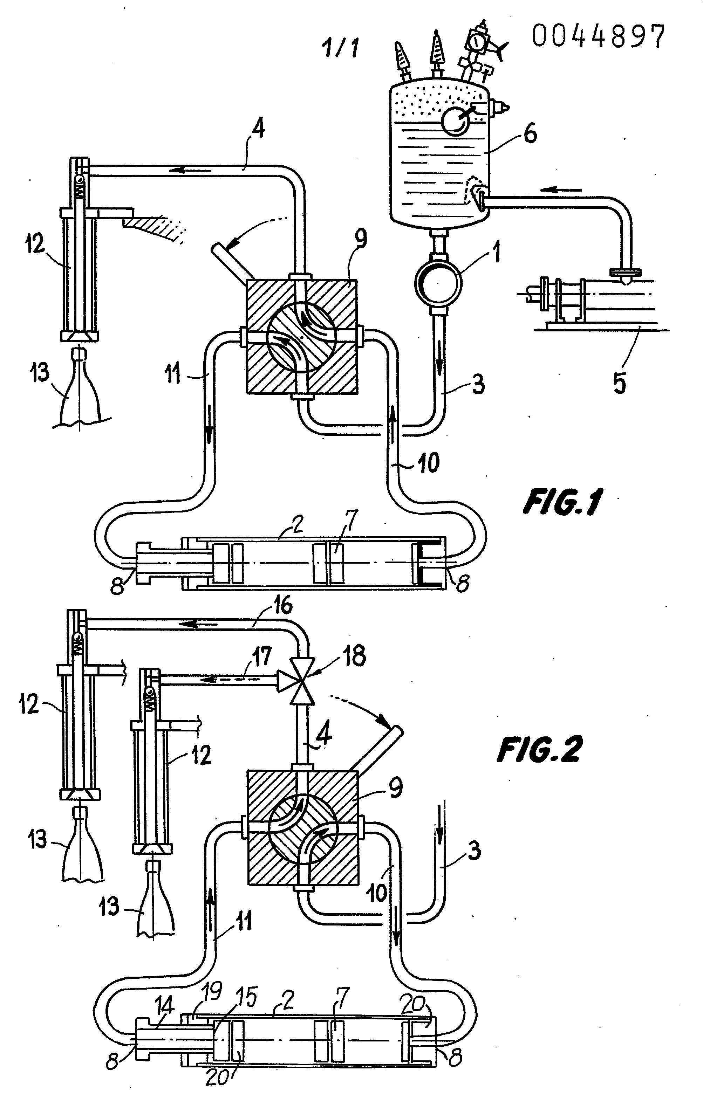

Fig. 1 illustrates a diagrammatic view of a liquid proportioning device according to the invention, in which the second duct, through which the liquid reaches the bottle filling nozzle, leads to a single filling nozzle ; and

Fig. 2 is a similar view to Fig. 1, but with a second bifurcated duct, which feeds two filling nozzles.

According to these drawings, it can be seen that the filling machines to which the improvements according to the present invention are applied, include a collector of the filling liquid 1, a proportioning cylinder 2, a first duct 3, through which the liquid leaves the collector 1, and a second duct 4, through which the liquid reaches the filling nozzle or nozzles 12 of the bottles 13.

The filling liquid is at a super atmospheric pressure produced by a pump 5 delivering the liquid to the tank 6 in which it is stored under pressure. The filling liquid itself shifts a sliding plunger 7 without shank with which the cylinder 2 of the dual effect type is provided there being an inlet and/or outlet hole 8 for the liquid at each end of the said cylinder 2.

The assembly has incorporated therei a distributor valve 9 preferably of the four-way L-type, connected to the said first and second ducts 3 and 4 and to a third and fourth ducts 10 and 11, respectively connected to the holes 8 of the cylinder 2.

In this arrangement, the valve 9 alternatively communicates in each cycle each of the said first and second ducts 3 and 4 with one of the said third and fourth ducts 10 and 11.

The cylinder 2 is provided in at least one of its ends with a proportioning setting device, advantageously made up of a screw 14 coaxial to the cylinder 2, with its free end 15 inserted in the cylinder 2 and capable of being axially shifted through screwing or unscrewing in a threaded axial hole of the head 19 of the cylinder 2, this free end of the screw 14 limiting the position of the closing part 20 which in turn limits the stroke of the sliding plunger 7 and, consequently, regulating the volume of the liquid proportioned by the cylinder 2.

As seen in figure 2, the second duct 4 can be bifurcated into a fifth and a sixth supply ducts 16 and 17, with two filling nozzles 12, there being a distributor 18, known in itself, in the bifurcation, preferably of the three-way type, which alternatively communicates in each cycle the said duct 4 with each of the aforementioned fifth and sixth ducts 16 and 17.

Compared with known proportioning devices, those incorporating the improvements disclosed in the present invention offer important advantages, among which not only there is no possibility of air inputs, which enables greater proportioning accuracy, but also advantage is taken of both strokes of the plunger of the dual action proportioning cylinder thereby achieving double performance.

After having disclosed the nature of the invention, as well as the way of putting it into practice, it is stated that whatever does not alter, change or modify its basic principle, can be subject to variation in detail.

CLAIMS

1.- Improvements in liquid proportioning devices, particularly applicable to bottle-filling machines, of the type which include a filling liquid collector (1), a proportioning-cylinder (2), a first duct (3), through which the liquid leaves the collector (1) and a second duct (4), through which the liquid reaches the bottle-filling nozzle (12), characterized in that a pressure higher than the atmosphere is applied to the liquid contained in the collector (1), which causes the shifting of a sliding plunger (7) without a shank with which the cylinder (2) is provided, with dual effect, there being an inlet and/or outlet hole (8) for the liquid at each end of the said cylinder (2), and the assembly incorporating a distributor valve (9), preferably of the four-way L-type, which is connected to the said first (3) and second (4) ducts and to a third (10) and fourth (11) ducts, respectively connected to the inlet and/or outlet holes (8) of the cylinder (2), all so that the valve (9) alternatively communicates in each cycle, each of the said first (3) and second (4) ducts with one of the said third (10) and fourth (11) ducts.

2.- Improvements according to claim 1, characterized in that the cylinder (2) is provided in at least one of its ends with a proportioning setting device, advantageously made up of a screw (14) coaxial to the cylinder (2), with its free end (15) inserted in the latter and which can be shifted axially by screwing or unscrewing in a threaded axial hole of the cylinder head (19), this free end (15) of the screw (14) limiting the position of a closing part (20), which in turn limits the stroke of the sliding plunger (7) and, consequently, regulating the volume of liquid proportioned by the cylinder (2).

3.- Improvements according to claim 1, characterized in that the said second duct (4) can be bifurcated into a fifth (16) and sixth (7) supply ducts of two filling nozzles (12), with a distributor (18), in itself known, being arranged in the bifurcation, preferably of the three ways type, which alternatively communicates in each cycle the said second duct (4) with each of the said fifth (16) and sixth (17) ducts.

1/1

FIG.1

FIG.2

0044897

European Patent
Office

EUROPEAN SEARCH REPORT

0044897

Application number

EP 80 40 1123

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | FR - A- 1 022 067 (DETREZ)<br>* Page 2, column 2, line 42 to page 3, column 2, line 22; figures 1-6 *<br>-- | 1,2 | B 67 C 3/20<br>G 01 F 11/06 |
| X | GB - A - 187 979 (C.C.M.U.G.)<br>* Entirely *<br>-- | 1,2 | |
| X | US - A - 1 464 676 (HARRINGTON)<br>* Page 1, line 63 to page 2, line 57; figures 1,2 *<br>-- | 1,2 | **TECHNICAL FIELDS SEARCHED (Int.Cl.³)**<br><br>B 67 C<br>G 01 F |
| X | DE - C - 75 714 (FOWLER)<br>* Page 1, column 1, line 1 to page 2, column 2, line 34; figures 1,2 *<br>-- | 1,2 | |
| | FR - A - 485 429 (SHELOR)<br>* Page 3, line 76 - page 4, line 73; figures 1-6 *<br>-- | 3 | |
| | GB - A - 200 042 (BUCKNELL)<br>* Entirely *<br>---- | 3 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | | | |
|---|---|---|---|
| The present search report has been drawn up for all claims | | | |
| Place of search<br>The Hague | Date of completion of the search<br>15-06-1981 | Examiner<br>VROMMAN | |

EPO Form 1503.1   06.78

European Patent
Office

0044897

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

---

## ✗ LACK OF UNITY OF INVENTION

The Search Division considers that the present European patent application does not comply with the requirement of unity of invention and relates to several inventions or groups of inventions,
namely:

```
1. Claims 1,2: Proportioning device
2. Claims 1,3: Distribution system
```

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims,

namely claims: